(19) Europäisches Patentamt
European Patent Office
Office européen des brevets

(11) EP 1 775 852 A2

(12) EUROPEAN PATENT APPLICATION

(43) Date of publication:
18.04.2007 Bulletin 2007/16

(51) Int Cl.:
$H04B\ 7/005^{(2006.01)}$

(21) Application number: 06122052.1

(22) Date of filing: 10.10.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 14.10.2005 US 250258

(71) Applicant: M/A-COM, INC.
Lowell, MA 01853 (US)

(72) Inventor: Gan, Hong
La Jolla,
California 92037 (US)

(74) Representative: Johnstone, Douglas Ian et al
Baron & Warren,
19 South End,
Kensington
London W8 5BU (GB)

(54) **Methods and apparatuses for transmission power control in a wireless communication system according to fading**

(57) The invention includes an apparatus and method for transmission power control in a wireless communication system. The method includes receiving at least one input parameter indicative of a transmission power level (302) for a wireless transmission, determining from said at least one input parameter whether the wireless transmission originates from a fast fading source or a slow fading source (304), and generating gain control settings to control the power supplied to the wireless terminal (318) based at least in part on said determination.. The apparatus for power control (10) in a wireless terminal includes a processor (14) for receiving at least one input parameter indicative of a transmission power level (32, 34, 36, 38, 40) and for generating a control parameter (42) based on the at least one input parameter (32, 34, 36, 38, 40), and a controller (16) for regulating an output transmission power level of the wireless terminal based on the control parameter

FIG. 3

## Description

The present invention relates generally to the regulation of electromagnetic waves, and more particularly to transmission power control in a wireless communication system.

Wireless communication systems, including cellular telephone networks, are the primary means of electronic communication for millions of users. User demand has driven the market for wireless devices to become smaller, lighter, more powerful and adaptable for multi-mode and multi-band usage. For example, software-defined radio (SDR) systems have been developed for wireless communication in which a transmitter signal is generated by a computer program using a selected modulation type. An SDR receiver uses a matching computer program to recover the signal intelligence. Despite such advances, the rapid growth in wireless communication traffic, as well as the introduction of advanced multimedia wireless capabilities, has created challenges for system designers in the area of transmission power control.

"Transmission power" generally describes the power for transmitting a signal. As used herein, a "signal" is defined as an electromagnetic wave capable of having intelligence imposed thereon. The term signal may also include more than one signal, as a device may transmit a plurality of related signals during a particular communication session.

Transmission power consumes a large part of the battery capacity in a wireless device. Put simply, the more power required for a device to transmit, the shorter the amount of time the device battery will last. Therefore, transmission power provides a limit to the number of devices that can communicate over a system at a given time because, generally, more traffic will increase the amount of power necessary for a device to transmit and will drain battery power. However, designers can increase system capacity and the battery life of wireless devices by actively adjusting transmission power relative to receivers in a network. The goal of transmission power control is to improve link quality of service while overcoming the deleterious effects of signal fade, multi-path signal scattering and other forms of environmental interference. As such, the challenge for designers is to minimize the transmission power necessary for a successful communication link in order to preserve battery life while maintaining an acceptable signal to noise ratio and bit error rate. While various transmission power control techniques are known in the art for 1G (analog voice) and 2G (digital voice) wireless communication systems, these methods have proven to be less effective by measures of cost, packaging and efficiency for "wideband" 2.5G and 3G (high speed voice/video/data) wireless systems.

In particular, transmission power control is important for code division multiple access (CDMA) based systems. CDMA signals are distinguished only by a unique code that is added to each signal before transmission. The CDMA method contrasts with other communication modes that use time, frequency, phase or other differences to distinguish between signals. Therefore, CDMA transmissions rely on transmission power levels for the coded signals to be clearly distinguishable and thus, present several power control challenges. For example, a "near and far" problem exists when signals that are nearer to a receiving terminal are stronger than signals that are relatively far away from the receiving terminal. In such an instance, the weak "far" received signals tend to be jammed by strong "near" signals. In another example, a similar phenomenon occurs when a signal is transmitted near to a receiving terminal, but its transmission is obstructed by environmental conditions. Although the signal source is relatively close to the receiving terminal, scattering, reflection, fading or other attenuation of the received signal will result in a weaker, distorted or dropped transmission link.

Although advanced network transmission power control presents new challenges for system designers, many high-efficiency power transmission technologies have been developed recently, including digital polar modulation and linear amplifier with no linear components (LINC) systems. Digital polar modulation allows for a more accurate reproduction of an input signal by separating the signal into its amplitude and phase components. The separated phase component is amplified by a highly non-linear (efficient) means of multiple control variables for gain control over a wide dynamic range. The amplitude component is later added back to the phase component for a relatively accurate reproduction of the input signal versus prior amplification methods. As such, digital polar modulation reduces the transmission power necessary for an efficient and successful link and as a result, increases system capacity.

Fast response, low power, low current consumption transmission power control is required to fully realize the benefits of highly efficient transmission technologies like digital polar modulation. Therefore, what is needed in the art is an improved transmission power control method adaptable for multi-mode, multi-band, SDR communication systems such as those that use digital polar modulation for wireless transmissions in "real world" environmental conditions.

The solution is provided by an apparatus for power control in a wireless terminal. A receiver receives at least one input parameter indicative of a transmission power level. A processor generates a control parameter based on the at least one input parameter and a controller regulates an output transmission power level of the wireless terminal based on the control parameter.

The invention will now be described by way of example with references to the accompanying drawings in which:

Fig. 1 illustrates a block diagram of a transmission power control system according to embodiments of the invention;

Fig. 2 is a block diagram illustrating the operation of the processor according to various embodiments of the invention;

Fig. 3 is a flow diagram illustrating transmission power control according to embodiments of the invention; and

Fig. 4 illustrates a block diagram of a transmission power control system for a digital polar transmitter according to embodiments of the invention.

Embodiments of the invention include apparatuses, methods and articles of manufacture adapted for transmission power control in a wireless communication system. As will be described further below, the invention regulates the output transmission power of a wireless terminal utilizing any of a variety of measures, including estimation from previous transmission power level information. As such, the invention is suitable for regulating the output transmission power level of a wireless terminal in a wireless communication system operating in a "real world" environment.

Before describing the invention in detail, certain terms should be defined for a more complete understanding of this description. As used herein, the term "signal" should be understood to include an electromagnetic wave capable of having intelligence or information impressed thereon. It should be further understood that a signal may include one or more signals such as, for example, when a device transmits a plurality of related signals in a given communication session.

The term "wireless terminal" as used herein includes any device that may transmit and/or receive a wireless signal. For example, a wireless terminal may include a mobile device such as a radiotelephone handset, a stationary device such as a base station or a relay device which may include one or more mobile or stationary devices. In general, a wireless terminal may communicate with one or more other terminals by transmitting a signal utilizing a wireless transmission mode. The invention is useful for a variety of wireless transmission modes which are currently known, or may in the future be known. Examples of wireless transmission modes contemplated herein include, but are not limited to: code division multiple access (CDMA), wide-band CDMA (W-CDMA), CDMA2000, time division multiple access (TDMA), global system for mobile communications/general packet radio service (GSM/GPRS), enhanced data GSM environment (EDGE), third generation GSM (3GSM), integrated digital enhanced network (iDEN), wireless local area network (WLAN), Bluetooth®, Wi-Fi® or any combination thereof. These wireless transmission modes may operate at multiple bandwidths including, for example, the GSM/GPRS 800 MHz and 1900 MHz frequency bandwidths in the United States and the international GSM/GPRS 900 MHz and 1800 MHz frequency bandwidths. In various embodiments, the wireless terminals may be software-defined radios (SDRs) wherein transmitter modulation is performed by a computer program with selectable multi-mode and/or multi-band settings to send a signal. A receiver SDR performs demodulation using a matching computer program to receive the signal intelligence.

In the embodiments described herein, the invention is oriented to compensate for power fading sources and their characteristics. However, the invention is adaptable to compensate for any of a variety of environmental conditions including, but not limited to, signal scattering, reflection, fading, shadowing, interference and/or any combination thereof. In addition, the approach proposed in the present invention can also be extended to multiple input and multiple output (MIMO) antenna systems.

In one embodiment, the invention uses a parallel multi-input and multi-control variable system architecture to control the output power of a transmitter. Generally, the inputs are classified as multidimensional measures of the difference between an actual power level and a desired power level at the related receivers in a network, i.e., the required power adjustments. The multi-control variables may be, for example, the multi-gain control ports of a transmitter. A digital programmable processor generates the executive commands for the multi-control variables using, for example, a power control program, divisive input measures and/or commands.

The multi-control variables provide large flexibility for the linear transmission systems that do not use linear amplification components, such as digital polar transmitters and "LINC" (linear amplifier with no linear components) systems, where the amplifiers may operate in a wide gain control range and achieve minimum current consumption over the entire operating dynamic range. In summary, the system provides fast power control convergence, low transmitted power, and low current consumption without requiring complicated high power, high dynamic range power control circuitry.

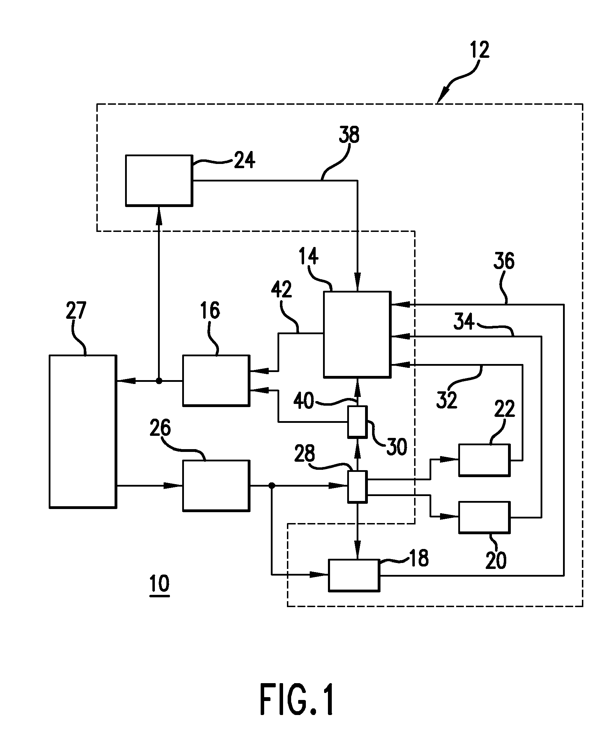

Turning now to the various embodiments of the invention, Figure 1 illustrates a block diagram of a transmission power control system. In one embodiment, the power control system 10 includes an input register 12 for recording control variables, a processor 14 for generating power control commands based at least in part on the control variables, and an output gain controller 16. However, it should be noted that one or more components may perform some or all of the functions attributed to any of the various components described herein and as such, the configuration in Figure 1 is intended to be illustrative of the various functions performed, rather than the components for performing the various functions.

In one embodiment, the input register 12 includes a received power register 18 for recording received signal power values, an interference correction register 20 for recording interference correction values from the network, a power control register 22 for received power control commands, and a transmitted power register 24 for recording measurements of transmitted power. An antenna 27 is coupled to the receive gain controller 26, which in one embodiment may include a receive amplifier (not shown) to amplify an incoming signal. The output of the receive gain controller 26 is coupled to the received power register 18 and a mobile receive digital module 28. A mobile transmission digital module 30 is shown to be coupled to the processor 14 as well as to the output gain controller 16. The output gain controller 16 may include a transmitter amplifier to amplify an outgoing signal. The output gain controller 16 is coupled to the antenna 27 for transmitting a signal based on the regulated output transmission power level.

In one embodiment, the control approach is a multi-input and multi-control variable approach. A plurality of input parameters 32, 34, 36, 38, 40 of the processor 14 are all available resources for estimating output transmission power control adjustments from measurements of both wireless terminal and network feedback. The input parameters 32, 34, 36, 38, 40 are classified based on their respective characteristics. The inputs and control variables are independent in time and gain range. The control variables set the gain. For example, the gain controller 16 may set the gain to compensate for a class of power fading sources with classified characteristics that will specify the resolution, response time, and power range.

The processor 14 may include software and/or hardware for receiving the power control input parameters 32, 34, 36, 38, 40 and generating commands that are outputted 42 to the gain controller 16 to regulate the output transmission power. The output of the processor 14 is based on the input parameters 32, 34, 36, 38, 40, their various characteristics, the various estimation criteria and control rules.

Various embodiments of the invention may be represented mathematically. As illustrated below, the mapping from power control input parameters and output transmission power are memory-less, non-linear functions which can be expressed in vector format:

$$X = \Phi\ (X,\ U,\ V,\ t)$$
$$P = \Psi\ (X, t)$$

$$(1)$$

Where, $X = (x_1, x_2, ... x_n)^T$ is the state vector of the transmitter signal strength. $U = (u_1, u_2, ... u_m)^T$ is the control variable vector, $V = (V_1, V_2, ... V_1])^T$ the signal vector. $P = (p_1, p_2, ... p_k)^T$ is the output power vector, $\Phi$ and $\Psi$ are mapping matrix functions, as will be known to those skilled in the art, and $t$ is time.

The control variable U is the output of the processor 14:

$$U = G(S, X, \theta, N) \qquad (2)$$

Where $S = (s_1, s_2, ... s_i)^T$ is the vector of power control inputs. The parameter G is the power control function that maps S to U based on power control rules through power control algorithms in the command generator. $\theta$ is the link channel parameter vector, and N is the noise vector. It should be observed that the circuit could be operated in non-linear mode. The control variable U depends on X. The link channel parameter $\theta$ is partially based on previous link channel information and partially adaptively updated through the network and/or wireless device. The power control function G is selected so that both the current drawn of the transmitter and the transmitted power at receiver are minimized while maintaining an acceptable signal to noise ratio and bit error rate.

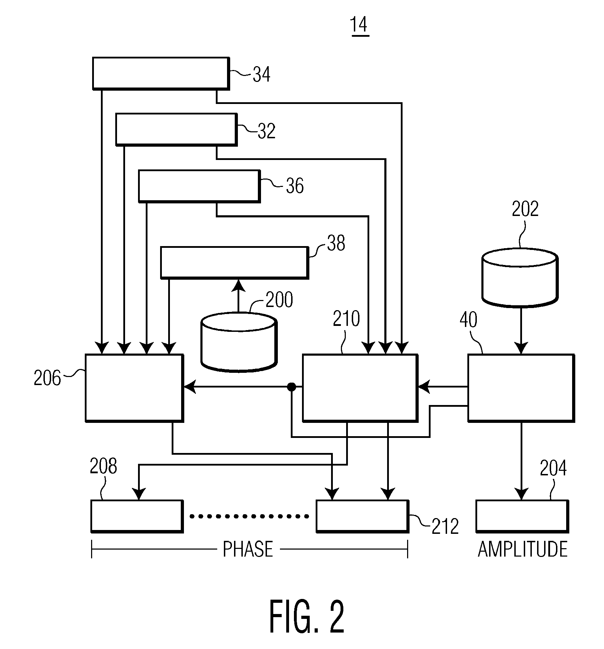

A block diagram illustrating the operation of the processor 14 is illustrated in Figure 2. In one embodiment, the processor 14 generates transmission output control for a multiple gain control variable transmitter. As such, the processor 14 receives input parameters from the input register 12 for network power control commands 32, interference correction 34, linked wireless device incoming transmission power 36, transmission output feedback correction 38 and a digital amplitude profile adjustment 40 from the mobile transmission digital module 30. In addition to the input parameters, in one embodiment the processor 14 may include frequency and temperature corrections 200 and digital amplitude corrections 202. These corrections 200 and 202 may be stored in memory either integrated within the processor 14 or in a memory device that may be accessed by the processor 14. For example, the frequency and temperature corrections 200 may compensate for environmental conditions that may have been present during a previous transmission output such as, but not necessarily, the transmission output feedback signal received from the transmission output feedback correction register 34.

The processor 14 utilizes the inputs from the digital amplitude profile adjustment 40 and the digital amplitude corrections 202 to generate a digital amplitude profile 204 for a transmission output signal. Likewise, the processor utilizes the input parameters 32, 34, 36, 38 and the frequency and temperature corrections 200 to generate gain control settings for each of the gain control variables of the output gain controller 16. For example, the non-linear phase component of the output gain controller 16 may include n gain control variables with variable '1' being the most significant gain control bit and variable 'n' being the least significant. In such a case, the processor 14 may generate each gain control bit utilizing a predetermined rule that may be the same or different than the rules governing the other bits. As such, at least one of the input parameters and corrections 32, 34, 36, 38, 40, 200, 202 subject to the rule for bit '1' may be utilized at block 206 to generate transmission gain control variable '1' 208. Likewise, the input parameters and corrections subject to the rule for bit 'n' may be utilized at block 210 to generate transmission gain control variable 'n' 212.

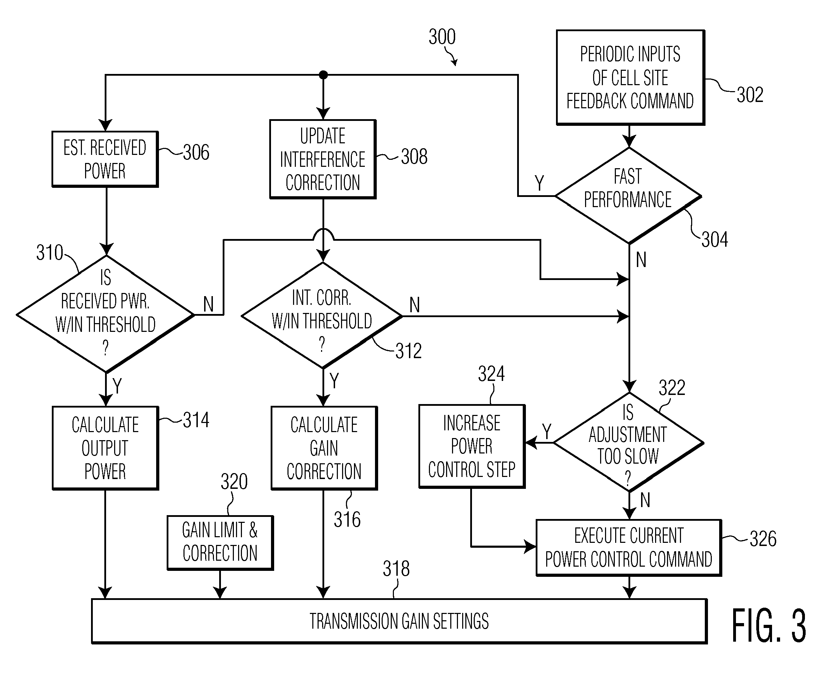

Figure 3 illustrates a flow diagram of a transmission power control algorithm according to embodiments of the invention. For example, the algorithm 300 may regulate transmission output power to compensate for power fading sources and their characteristics. The algorithm 300 begins at block 302 where transmission power control inputs are received by the processor 14 from the network. The processor 14 determines at block 304 whether the power control feedback requires fast performance, which would indicate a fast fading source such as fast moving wireless source, or relative slow performance, indicating a slow fading source such as cellphone user stuck in slow traffic. If the source is a fast fading source, the processor 14 estimates the received power 306 and updates the environmental interference correction 308 based on the data received from the network. The processor 14 then compares the estimated received power and the interference correction to predetermined variables at blocks 310 and 312 respectively. For example, the variable compared to the received power may represent the minimum acceptable received transmission power level or the maximum allowable fade for received transmission power. If the estimated received power and the interference correction are within acceptable parameters at blocks 314 and 316 respectively, the processor 14 may utilize the calculated output power and gain correction to generate one or more gain control settings 318. In one embodiment, predetermined gain and correction limits 320 may govern the gain control settings 318. For example, the processor 14 may be limited to a maximum adjustment for a particular input period. In one embodiment, "fine" control rules, as will be known to those skilled in the art, may be utilized to regulate the gain when fast performance is required.

If the processor 14 determines that fast performance is not required based on the feedback inputs from the network at block 304, or if the estimated received power and/or interference correction are not within acceptable parameters in blocks 310 and 312, the processor will determine whether the power control adjustment is too slow at block 322. If the processor 14 determines that the power control adjustment is too slow, the processor increases the power control intervals at block 324. For example, the processor 14 may increase the frequency of feedback sampling periods in which it can generate power control commands 326. If the processor 14 determines that the adjustment is not too slow, the processor 14 will maintain the frequency of feedback sampling periods and generate power control commands 326 at the same rate. For example, "coarse" control rules, as will be known to those skilled in the art, may be applied to regulate gain when slow fading is detected.

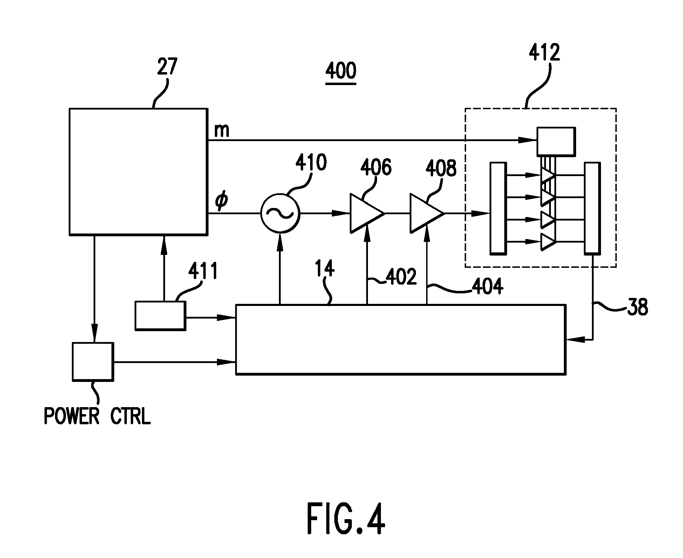

Figure 4 shows a digital transmitter according to embodiments of the invention. The transmitter 400 includes two core gain controllers 402, 404 with two stages of driver amplifiers 406, 408, a voltage controlled oscillator (VCO) 410 and reference gain control 411 are deployed. The two driver amplifiers 406, 408 independently control the gain of an RF phase signal. The first driver amplifier 406 provides relatively fine ($\geq$ 25 dB) gain con-

trol steps with 30 dB dynamic range with maximum gain from 0 to 3 dB. The second amplifier 408 operates in non-linear mode and its gain is controlled through the bias settings. It provides relatively coarse gain control (1 dB to 2 dB) steps with 40 dB dynamic range.

The initial RF power from the VCO 410 is adjustable in high and low modes with a 12 dB dynamic range. In one embodiment, the reference gain of the digital amplitude restoration amplifiers 412 gain is controlled through the reference bias settings.

The gain controllers 402, 404 are core power control components that are independently controlled to execute divisive and adaptive control algorithms. In one embodiment, the overall system provides more than 80 dB dynamic range and is adaptable to transmission power control needs for wireless communication networks, such as, for example, CDMA2K, WCDMA, TDMA, GSM/GPRS, EDGE, 3GSM, WLAN, Wi-Fi® and Bluetooth® networks.

As such, the invention provides fast response, low power, low current consumption transmission power control for a variety of power transmission technologies, including digital polar modulation. It will be appreciated that the invention provides transmission power control for wireless devices to facilitate improved wireless transmissions in various real world environmental conditions.

## Claims

1. An apparatus for power control (10) in a wireless terminal comprising:

   a processor (14) for receiving at least one input parameter indicative of a transmission power level (32, 34, 36, 38, 40) and for generating a control parameter (42) based on the at least one input parameter (32, 34, 36, 38, 40); and
   a controller (16) for regulating an output transmission power level of the wireless terminal based on the control parameter.

2. The apparatus of claim 1, wherein the at least one input parameter (32, 34, 36, 38, 40) is associated with transmission power level characteristics of a received signal.

3. The apparatus of claim 1 or 2, wherein the at least one input parameter (32, 34, 36, 38, 40) is associated with power fading characteristics of a received signal.

4. The apparatus of claim 1, 2 or 3, wherein the output transmission power level is regulated by the controller (16) based on a predetermined minimum power level.

5. The apparatus of claim 1, 2 or 3 wherein the output transmission power level is regulated relative to the transmission power level indicated by the at least one received input parameter.

6. The apparatus of any preceding claim, wherein the processor (14) sends the control parameter (42) to the controller (16) anw wherein the controller (16) is associated with at least one digital polar modulator for regulating the output transmission power level of the wireless terminal.

7. The apparatus of any preceding claim, wherein the wireless terminal is a radiotelephone handset.

8. A method for power control (300) in a wireless terminal comprising:

   receiving at least one input parameter indicative of a transmission power level (302) for a wireless transmission;
   determining from said at least one input parameter whether the wireless transmission originates from a fast fading source or a slow fading source (304); and
   generating gain control settings to control the power supplied to the wireless terminal (318) based at least in part on said determination.

9. The method of claim 8, if the wireless transmission is determined to originate from a fast fading source, further comprising:

   estimating the magnitude of the transmission power level (306);
   updating an interference correction setting based on said at least one input parameter (308); and
   calculating an ouptut transmission power level and a gain correction setting (314, 316) if the magnitude of the transmission power level and the interference correction setting are within predetermined thresholds (310, 312).

10. The method of claim 9, if the wireless transmission is determined to originate from a slow fading source, further comprising the step of:

   increasing power control intervals (324) by increasing the frequency of feedback sampling periods.

FIG.1

FIG. 2

FIG. 3

300

302 PERIODIC INPUTS OF CELL SITE FEEDBACK COMMAND

304 FAST PERFORMANCE — Y / N

306 EST. RECEIVED POWER

308 UPDATE INTERFERENCE CORRECTION

310 IS RECEIVED PWR. W/IN THRESHOLD ? — Y / N

312 INT. CORR. W/IN THRESHOLD ? — Y / N

314 CALCULATE OUTPUT POWER

316 CALCULATE GAIN CORRECTION

318 TRANSMISSION GAIN SETTINGS

320 GAIN LIMIT & CORRECTION

322 IS ADJUSTMENT TOO SLOW ? — Y / N

324 INCREASE POWER CONTROL STEP

326 EXECUTE CURRENT POWER CONTROL COMMAND

FIG.4